# EUROPÄISCHE PATENTANMELDUNG

(11) **EP 2 610 120 A2**
(43) Veröffentlichungstag der Anmeldung: **03.07.2013**
(21) Anmeldenummer: 12192195.1
(22) Anmeldetag: 12.11.2012
(51) Int. Cl.: B60S 1/38

(54) **Wischblattvorrichtung und Verfahren zu deren Herstellung**

(30) Priorität: 29.12.2011 DE 102011090126
(71) Anmelder: ROBERT BOSCH GMBH, 70442 Stuttgart (DE)
(72) Erfinder: Windmolders, Eric, B-3510 Kermt (BE); Wilms, Christian, 3582 Beringen-Koersel (BE)

(57) **Zusammenfassung**

Die Erfindung geht aus von einer Wischblattvorrichtung mit einer Federschieneneinheit (10a; 10b) und einer Wischleiste (12a; 12b).

Es wird vorgeschlagen, dass die Wischleiste (12a; 12b) mit zumindest einem Bauteil der Federschieneneinheit (10a; 10b) einstückig ausgebildet ist.

## Beschreibung

### Stand der Technik

Die Erfindung geht aus von einer Wischblattvorrichtung nach dem Oberbegriff des Patentanspruchs 1.

Es ist bereits eine Wischblattvorrichtung mit einer Federschieneneinheit und einer Wischleiste bekannt.

### Offenbarung der Erfindung

Die Erfindung geht aus von einer Wischblattvorrichtung mit einer Federschieneneinheit und einer Wischleiste.

Es wird vorgeschlagen, dass die Wischleiste mit zumindest einem Bauteil der Federschieneneinheit einstückig ausgebildet ist, wodurch eine besonders haltbare Verbindung bei geringem Gewicht erreicht werden kann. Unter einer "Federschieneneinheit" soll in diesem Zusammenhang insbesondere eine Einheit verstanden werden, die eine federelastische Federschiene umfasst. Unter einer "federelastischen Federschiene" soll in diesem Zusammenhang insbesondere eine Schiene verstanden werden, die zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und die insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Vorzugsweise weist die Federschiene in einem unbelasteten Zustand im Wesentlichen eine Form eines gebogenen Stabs und besonders vorteilhaft eines abgeflachten gebogenen Stabs auf. Besonders vorteilhaft ist eine Krümmung der Federschiene entlang einer Längserstreckung in einem unbelasteten Zustand größer als eine Krümmung einer Fahrzeugoberfläche eines Kraftfahrzeugs, insbesondere einer Fahrzeugscheibe, über die die Federschiene in wenigstens einem Betriebszustand geführt wird. Unter einer "Wischleiste" soll in diesem Zusammenhang insbesondere eine Leiste verstanden werden, die dazu vorgesehen ist, eine Fahrzeugscheibe zu wischen. Bevorzugt ist die Wischleiste aus einem Gummimaterial ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzgussverfahren. Unter "vorgesehen" soll insbesondere speziell ausgelegt und/oder ausgestattet verstanden werden.

In einer weiteren Ausgestaltung wird vorgeschlagen, dass die Federschieneneinheit eine federelastische Federschiene aufweist, die mit der Wischleiste in einem Mehrkomponentenextrusionsverfahren hergestellt ist, wodurch eine besonders stabile Verbindung hergestellt und/oder Herstellungskosten vorteilhaft gesenkt werden können.

Des Weiteren wird vorgeschlagen, dass die Federschiene und die Wischleiste in einem Mehrkomponentenextrusionsverfahren hergestellt sind, wodurch eine Herstellung vereinfacht werden kann. Unter einem "Mehrkomponentenextrusionsverfahren" soll in diesem Zusammenhang insbesondere ein Extrusionsverfahren verstanden werden, bei dem zumindest zwei verschiedene Materialien miteinander extrudiert werden. Bevorzugt sind die zumindest zwei Materialien ausschließlich in einer Grenzschicht miteinander vermischt. Ferner wird vorgeschlagen, dass die Wischblattvorrichtung ein Windabweiserelement aufweist, das einstückig mit der Federschiene ausgebildet ist, wodurch auf ein Verbindungselement zur Verbindung des Windabweiserelements vorteilhaft verzichtet werden kann und/oder Herstellungskosten gesenkt werden können. Unter einem "Windabweiserelement" soll in diesem Zusammenhang insbesondere ein Element verstanden werden, das dazu vorgesehen ist, einen auf die Wischblattvorrichtung wirkenden Fahrtwind abzuweisen und/oder für ein Anpressen der Wischleiste auf eine Fahrzeugscheibe zu nutzen. Bevorzugt erstreckt sich das Windabweiserelement über zumindest 50 %, besonders bevorzugt über zumindest 70 %, ganz besonders bevorzugt über zumindest 90 % einer Gesamtlängserstreckung der Federschiene.

Die Wischblattvorrichtung kann besonders haltbar und stabil ausgeführt werden, wenn das Windabweiserelement und die Federschiene aus unterschiedlichen Materialien hergestellt sind. Zusätzlich wird vorgeschlagen, dass das Windabweiserelement und die Wischleiste aus unterschiedlichen Materialien hergestellt sind. Bevorzugt handelt es sich bei zumindest einem Material um ein Gummimaterial. Besonders bevorzugt handelt es sich bei zumindest einem weiteren Material um einen Kunststoff.

Ist die Federschiene zumindest teilweise aus einem Kunststoff hergestellt, kann die Federschiene besonders stabil, verwindungssteif und leicht ausgeführt werden. Zusätzlich wird vorgeschlagen, dass die Federschiene Faserelemente aufweist, die dazu vorgesehen sind, eine Festigkeit der Federschiene zu erhöhen. Bevorzugt handelt es sich bei dem Kunststoff um ein Duroplast und/oder um ein Thermoplast.

Eine Stabilität der Federschiene kann vorteilhaft erhöht werden, wenn die Faserelemente in ihrer Haupterstreckungsrichtung im Wesentlichen parallel zu einer Längsrichtung ausgerichtet sind. Unter einer "Längsrichtung" soll dabei in diesem Zusammenhang insbesondere eine Richtung verstanden werden, die parallel zu einer Hauptlängserstreckung der Federschiene verläuft. Unter einer "Hauptlängserstreckung" soll in diesem Zusammenhang insbesondere eine größtmögliche Erstreckung verstanden werden. Unter "im Wesentlichen" soll dabei mit einer Abweichung von weniger als 5° verstanden werden.

In einer zusätzlichen Ausgestaltung der Erfindung wird vorgeschlagen, dass die Faserelemente in der Federschiene eingebracht sind, wodurch eine Stabilität der Federschiene vorteilhaft erhöht werden kann. Unter "eingebracht" soll in diesem Zusammenhang insbesondere vollständig umschlossen, integriert und/oder eingegossen verstanden werden.

In einer weiteren Ausgestaltung der Erfindung wird vorgeschlagen, dass die Federschieneneinheit ein Aufnahmeelement umfasst, das einstückig mit der Wischleiste ausgebildet und zur Aufnahme einer Federschiene vorgesehen ist, wodurch eine besonders stabile und haltbare Verbindung des Aufnahmeelements mit der Wischleiste erreicht werden kann. Unter einem "Aufnahmeelement" soll dabei in diesem Zusammenhang insbesondere ein Element verstanden werden, das dazu vorgesehen ist, ein Windabweiserelement und eine Federschiene zumindest formschlüssig zu verbinden.

Eine Herstellung der Wischblattvorrichtung kann besonders kostengünstig und schnell erfolgen, wenn das Aufnahmeelement und die Wischleiste in einem Coextrusionsverfahren hergestellt sind.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischblattvorrichtung in einer Schnittdarstellung und
- Fig. 2: ein weiteres Ausführungsbeispiel einer Wischblattvorrichtung.

### Beschreibung der Ausführungsbeispiele

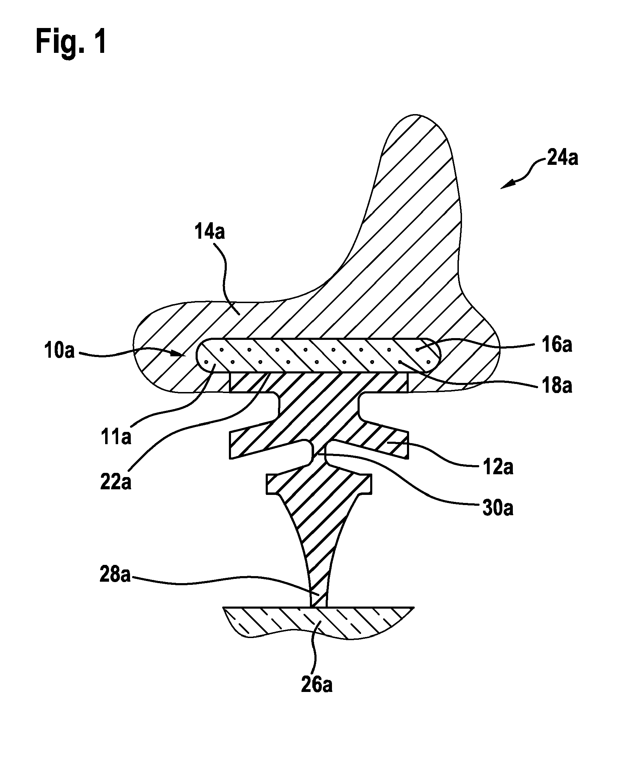

Figur 1 zeigt ein Wischblatt 24a mit einer erfindungsgemäßen Wischblattvorrichtung. Die Wischblattvorrichtung weist eine Federschieneneinheit 10a mit einer federelastischen Federschiene 11a und eine Wischleiste 12a auf. Die Federschiene 11a ist einstückig mit der Wischleiste 12a ausgebildet. Die Federschiene 11a weist in einem unbelasteten Zustand im Wesentlichen eine Form eines abgeflachten gebogenen Stabs auf. Die Wischleiste 12a ist aus einem elastischen Gummimaterial ausgebildet.

Das Wischblatt 24a ist zum Wischen einer Fahrzeugscheibe, wie insbesondere einer Kraftfahrzeugscheibe 26a, vorgesehen. Wird das Wischblatt 24a über die Kraftfahrzeugscheibe 26a bewegt, kippt eine Wischlippe 28a der Wischleiste 12a um eine Längsachse, die parallel zu einer Längsrichtung der Federschiene 11a verläuft. Zur beweglichen Lagerung der Wischlippe 28a weist die Wischleiste 12a einen Kippsteg 30a auf, der elastisch ausgebildet ist.

Die Federschiene 11a und die Wischleiste 12a sind in einem Mehrkomponentenextrusionsverfahren hergestellt. Dabei sind die verschiedenen Materialien ausschließlich in einer Grenzschicht 22a miteinander vermischt. Die Grenzschicht 22a weist eine Dicke von weniger als 1 mm auf.

Die Wischblattvorrichtung weist ferner ein Windabweiserelement 14a auf, das einstückig mit der Federschiene 11a ausgebildet ist. Das Windabweiserelement 14a ist zur Abweisung von Fahrtwind vorgesehen, wodurch das Wischblatt 24a auf die Kraftfahrzeugscheibe 26a angedrückt wird.

Das Windabweiserelement 14a und die Federschiene 11a sind aus unterschiedlichen Materialien hergestellt. Das Windabweiserelement 14a und die Wischleiste 12a sind ebenfalls aus unterschiedlichen Materialien hergestellt. Die Federschiene 11a ist dabei aus einem Kunststoff hergestellt. Bei dem Kunststoff handelt es sich dabei um ein dem Fachmann als sinnvoll erscheinendes Thermoplast. Die Wischleiste 12a ist aus einem Gummimaterial hergestellt. Das Windabweiserelement 14a ist aus einem Kunststoff hergestellt.

Die Federschiene 11a weist zur Verstärkung Faserelemente 16a, 18a auf. Die Faserelemente 16a, 18a sind aus Polyhexamethylenadipinsäureamid hergestellt. Es sind in diesem Zusammenhang jedoch auch andere, dem Fachmann als sinnvoll erscheinende Materialien zur Herstellung der Faserelemente 16a, 18a denkbar, wie insbesondere Kunststoffe, Textilien und/oder Metalle.

Die Faserelemente 16a, 18a sind in ihrer Haupterstreckungsrichtung im Wesentlichen parallel zur Längsrichtung ausgerichtet. Dabei sind die Faserelemente 16a, 18a voneinander beabstandet. Die Faserelemente 16a, 18a werden bei einer Extrusion direkt in die Federschiene 11a eingebracht. Somit sind alle Faserelemente 16a, 18a von der Federschiene 11a vollständig umschlossen.

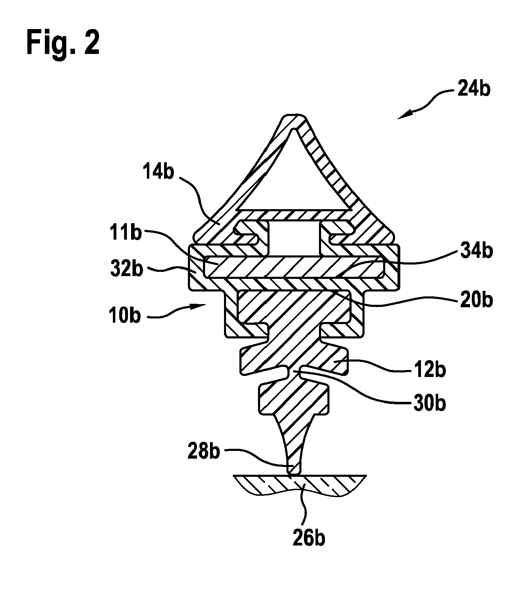

In der Figur 2 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in der Figur 1 durch den Buchstaben b in den Bezugszeichen des Ausführungsbeispiels der Figur 2 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Eine Federschieneneinheit 10b umfasst ein Aufnahmeelement 32b, das einstückig mit einer Wischleiste 12b ausgebildet und zur Aufnahme einer Federschiene 11 b vorgesehen ist. Das Aufnahmeelement 32b weist einen Längsführungskanal 34b auf, in den die Federschiene 11 b eingeschoben ist. Ein Windabweiserelement 14b und die Federschiene 11 b sind formschlüssig mit dem Aufnahmeelement 32b verbunden. Es ist in diesem Zusammenhang jedoch auch denkbar, die Federschiene 11 b und/oder das Windabweiserelement 14b durch einen Stoffschluss mit dem Aufnahmeelement 32b zu verbinden. Dabei sind mehrere, dem Fachmann als sinnvoll erscheinende Verbindungsverfahren, wie insbesondere Schweißverfahren und/oder Klebeverfahren, denkbar.

Die Wischleiste 12b und das Aufnahmeelement 32b sind von unterschiedlichen Materialien gebildet. Das Aufnahmeelement 32b ist von einem Thermoplast gebildet. Eine Herstellung des Aufnahmeelements 32b und der Wischleiste 12b erfolgt in einem Coextrusionsverfahren. Dabei sind die verschiedenen Materialien ausschließlich in einer Grenzschicht 20b miteinander vermischt. Die Grenzschicht 20b weist eine Dicke von weniger als 1 mm auf.

## Patentansprüche

1. Wischblattvorrichtung mit einer Federschieneneinheit (10a; 10b) und einer Wischleiste (12a; 12b), **dadurch gekennzeichnet, dass** die Wischleiste (12a; 12b) mit zumindest einem Bauteil der Federschieneneinheit (10a; 10b) einstückig ausgebildet ist.

2. Wischblattvorrichtung nach Anspruch 1, **dadurch gekennzeichnet, dass** die Federschieneneinheit (10a) eine federelastische Federschiene (11a) aufweist, die mit der Wischleiste (12a) in einem Mehrkomponentenextrusionsverfahren hergestellt ist.

3. Wischblattvorrichtung nach Anspruch 2, **gekennzeichnet durch** ein Windabweiserelement (14a), das einstückig mit der Federschiene (11a) ausgebildet ist.

4. Wischblattvorrichtung nach Anspruch 3, **dadurch gekennzeichnet, dass** das Windabweiserelement (14a) und die Federschiene (11a) aus unterschiedlichen Materialien hergestellt sind.

5. Wischblattvorrichtung nach Anspruch 4, **dadurch gekennzeichnet, dass** das Windabweiserelement (14a) und die Wischleiste (12a) aus unterschiedlichen Materialien hergestellt sind.

6. Wischblattvorrichtung zumindest nach Anspruch 2, **dadurch gekennzeichnet, dass** die Federschiene (11a) zumindest teilweise aus einem Kunststoff hergestellt ist.

7. Wischblattvorrichtung zumindest nach Anspruch 2, **dadurch gekennzeichnet, dass** die Federschiene (11a) Faserelemente (16a, 18a) aufweist, die dazu vorgesehen sind, eine Festigkeit der Federschiene (11a) zu erhöhen.

8. Wischblattvorrichtung nach Anspruch 7, **dadurch gekennzeichnet, dass** die Faserelemente (16a, 18a) in ihrer Haupterstreckungsrichtung im Wesentlichen parallel zu einer Längsrichtung ausgerichtet sind.

9. Wischblattvorrichtung nach einem der vorhergehenden Ansprüche, **dadurch gekennzeichnet, dass** die Federschieneneinheit (10b) ein Aufnahmeelement (32b) umfasst, das einstückig mit der Wischleiste (12b) ausgebildet und zur Aufnahme einer Federschiene (11b) vorgesehen ist.

10. Wischblattvorrichtung nach Anspruch 9, **dadurch gekennzeichnet, dass** das Aufnahmeelement (32b) und die Wischleiste (12b) in einem Coextrusionsverfahren hergestellt sind.

11. Wischblatt mit einer Wischblattvorrichtung nach einem der vorhergehenden Ansprüche.

12. Verfahren zur Herstellung einer Wischblattvorrichtung nach einem der vorhergehenden Ansprüche.
